# EUROPEAN PATENT SPECIFICATION

(11) **EP 2 424 663 B1**
(45) Date of publication and mention of the grant of the patent: **22.05.2019**
(21) Application number: 10770108.8
(22) Date of filing: 08.04.2010
(51) Int. Cl.: B01J 31/26, B01J 23/888, B01J 35/10, B01J 37/20, C07F 19/00, B01J 37/03, C10G 45/08

(54) **METHOD FOR MAKING A HYDROCONVERSION MULTI-METALLIC CATALYST**
HERSTELLUNGSVERFAHREN FÜR EINEN MULTIMETALL-HYDROKONVERSIONSKATALYSATOR
PROCÉDÉ DE FABRICATION D'UN CATALYSEUR D'HYDROCONVERSION MULTI-MÉTALLIQUE

(30) Priority: 29.04.2009 US 432730; 29.04.2009 US 432728; 29.04.2009 US 432727; 29.04.2009 US 432723; 29.04.2009 US 432721; 29.04.2009 US 432719
(43) Date of publication of application: 07.03.2012
(73) Proprietor: Chevron U.S.A. Inc., San Ramon, CA 94583 (US)
(72) Inventor: KUPERMAN, Alexander, E., Orinda CA 94563 (US); MAESEN, Theodorus, Point Richmond CA 94801 (US); DYKSTRA, Dennis, Pinole CA 94564 (US); UCKUNG, Soy, Richmond CA 94805 (US); FONG, Darren, Oakland CA 94563 (US)
(74) Representative: Haseltine Lake LLP
(86) International application number: PCT/US2010/030326
(87) International publication number: WO 2010/126689

(56) References cited:
- WO-A1-02/04117
- WO-A1-2009/058783
- US-A- 6 030 915
- US-A1- 2003 178 344
- US-A1- 2005 101 480
- US-A1- 2008 060 977
- US-A1- 2009 057 201
- US-B1- 7 288 182

## Description

### CROSS-REFERENCE TO RELATED APPLICATIONS

This application claims priority to US Patent Application Serial Nos. 12/432,730, 12/432,728, 12/432,727, 12/432,723, 12/432,721, and 12/432,719, all with a filing date of April 29, 2009.

### TECHNICAL FIELD

The invention relates generally to methods for forming a catalyst from a hydroprocessing catalyst precursor.

### BACKGROUND

The petroleum industry is increasingly turning to heavy crudes, resids, coals and tar sands, i.e., lower grade hydrocarbon ("heavy oil"), as sources for feedstocks. The upgrading or refining of these feedstocks is accomplished by treating the feedstocks with hydrogen in the presence of catalysts to effect conversion of at least a portion of the feeds to lower molecular weight hydrocarbons, or to effect the removal of unwanted components, or compounds, or their conversion to innocuous or less undesirable compounds.

In the hydroconversion process, catalysts that are unstabilized, or of limited mechanical integrity, undergo considerable shrinkage of their geometric volume when exposed to severe conditions. When the catalysts are used to fill a reactor space as in a fixed bed, the catalyst shrinkage produces unoccupied channels through which reactants can pass without being in contact with the catalyst. Channeling of reactants decreases effectiveness of the catalyst bed regardless of the activity of the catalyst in the reactor space. Catalyst shrinkage further decreases effectiveness of the bed utilization as less reactor volume is used. Lastly, the pressure drop across the reactor due to the catalyst's volumetric shrinkage can have a significant impact on the reactor performance.

In the hydroconversion process, it is desirable to employ catalyst having sufficient open volume (porosity) for low mass transfer resistance and facilitate efficient through flow of reactors, while at the same the specific area of each catalyst body should be as large as possible to increase exposure of the reactants to the catalyst material. However, a catalyst that is highly porous does not necessarily mean that the catalyst has a lot of surface area. The catalyst may be too porous, having very little in terms of surface area and correspondingly, low catalytic activity in terms of reactive sites.

There is a need for a bulk / unsupported catalyst for use in the hydroconversion of lower grade hydrocarbon with improved performance, i.e., providing high yield conversions with optimum porosity and surface area. There is also a need for a bulk multi-metallic catalyst having sufficient pore volume / size for hydrotreating heavy oil feeds. There is further a need for a bulk / unsupported catalyst providing high yield conversions as well as exhibiting low shrinkage when exposed to high reaction temperatures.
US 2009057201 A1 describes a process for preparing a hydroprocessing bulk catalyst by sulfiding at least one Group VIB metal compound and optionally at least one group VIII metal compound with a sulfiding agent forming a catalyst precursor; and mixing the catalyst precursor with a hydrocarbon compound to form the hydroprocessing catalyst composition.
US 7288182 B1 describes a process for hydroprocessing petroleum and chemical feedstocks by use of a bulk multimetallic catalyst comprised of at least one Group VIII non-noble metal and at least one, preferably two Group VIB metal wherein the ratio of Group VIB metal to Group VIII metal is from about 10:1 to 1:10.
WO 0204117 A1 describes a process for preparing a catalyst composition wherein at least one Group VIII non-noble metal component and at least two Group VIB metal components are combined and reached in the presence of a protic liquid, after which the resulting composition is isolated and dried.
WO2009058783 A1 (document available under Article 54(3) EPC only) describes: a catalyst precursor comprising at least a promoter metal selected from Group VIII, Group IIB, Group IIA, Group IVA and combinations thereof having an oxidation state of +2 or +4, at least one Group VIB metal having an oxidation state of +6, and at least one organic oxygen-containing ligand; and Catalysts prepared from the sulfidation of such catalyst precursors being used in the hydroprocessing of hydrocarbon feeds.

### SUMMARY OF THE INVENTION

The present invention provides a method for forming a catalyst from a catalyst precursor having a low volumetric shrinkage, the method comprising:
forming a precipitate comprising at least a promoter metal precursor, at least a Group VIB metal precursor, optionally at least a ligating agent, and optionally at least a diluent, wherein the promoter metal precursor is selected from Group VIII, Group IIB, Group IIA, Group IVA and combinations thereof;
removing at least 50% of liquid from the precipitate forming a filter cake;
drying the filter cake by a non-agglomerative drying method selected from flash drying, freeze drying, and fluidized bed drying;
adding to the filter cake at least one of a shaping aid agent, a pore forming agent, a peptizing agent, a diluent, and combinations thereof, forming a batch mixture;
shaping the batch mixture into a shaped catalyst precursor via any of pelletizing, extrusion, tableting, molding, tumbling, pressing, spraying and spray drying;
drying the shaped catalyst precursor at a temperature ranging from 50°C to 200°C for about 15 minutes to 12 hours; and
sulfiding the shaped catalyst precursor forming the bulk multi-metallic catalyst,
wherein the shaped catalyst precursor has a volumetric shrinkage of less than 12% upon sulfiding at a temperature of at least 100°C for at least 30 minutes; and
wherein the catalyst precursor is a hydroxide material.

Disclosed herein is a stable bulk multi-metallic catalyst with low volume shrinkage for use in the hydroconversion of hydrocarbon feedstock, the catalyst is formed from a catalyst precursor having a residual geometric volume shrinkage of less than 10% upon exposure to a temperature of at least 100°C for at least 30 minutes, the precursor comprising: at least a Group VIB metal compound; at least a promoter metal compound selected from Group VIII, Group IIB, Group IIA, Group IVA and combinations thereof; optionally at least a ligating agent; optionally at least a diluent; wherein the catalyst precursor.

Also disclosed herein is a method for forming a catalyst from a catalyst precursor having a low volumetric shrinkage, the method comprising: forming a precipitate comprising at least a promoter metal precursor, at least a Group VIB metal precursor, optionally at least a ligating agent, and optionally at least a diluent, wherein the promoter metal precursor is selected from Group VIII, Group IIB, Group IIA, Group IVA and combinations thereof; removing at least 50% of liquid from the precipitate forming a filter cake; adding to the filter cake at least one of a shaping aid agent, a pore forming agent, a peptizing agent, a diluent, and combinations thereof, forming a batch mixture; shaping the batch mixture into a shaped catalyst precursor via any of pelletizing, extrusion, tableting, molding, tumbling, pressing, spraying and spray drying; drying the shaped catalyst precursor at a temperature ranging from 50°C. to 200°C. for about 15 minutes to 12 hours; and sulfiding the shaped catalyst precursor forming the bulk multi-metallic catalyst. The shaped catalyst precursor is measured for volumetric shrinkage before and after sulfiding, showing a volumetric shrinkage of less than 10%.

Also disclosed herein is a process for hydrotreating a hydrocarbon feed under hydroprocessing conditions. The process comprises contacting the hydrocarbon feed with a bulk multi-metallic catalyst prepared by sulfiding a catalyst precursor comprising at least a Group VIB metal compound; at least a promoter metal compound selected from Group VIII, Group IIB, Group IIA, Group IVA and combinations thereof; optionally at least a ligating agent; optionally at least a diluent; the catalyst precursor after being shaped, having an essentially monomodal pore size distribution with at least 95% of the pores being macropores and a total pore volume of at least 0.08 g/cc.

Disclosed herein, a catalyst precursor, upon sulfidation, forms a bulk-multimetallic catalyst for hydrotreating a hydrocarbon feed under hydroprocessing conditions. The catalyst precursor comprises at least a Group VIB metal compound; at least a promoter metal compound selected from Group VIII, Group IIB, Group IIA, Group IVA and combinations thereof; optionally at least a ligating agent; optionally at least a diluent. The catalyst precursor after being shaped, has an essentially monomodal pore size distribution with at least 95% of the pores being macropores and a total pore volume of at least 0.08 g/cc.

Also disclosed herein is a process to prepare a bulk multi-metallic catalyst for hydrotreating a hydrocarbon feed. The process comprising: providing at least a Group VIII metal precursor M^{VIB} and at least promoter metal precursor M^{P}, the promoter metal precursor M^{P} is selected from the group of Group VIII, Group IIB, Group IIA, Group IVA and combinations thereof; has an oxidation stat^{e} of either +2 or +4; combining the at least a Group VIII and the at least a promoter metal precursor to form a catalyst precursor precipitate in a liquid solution; separating the catalyst precursor precipitate from the liquid solution forming a filter cake; drying the catalyst precursor filter cake by a non-agglomerative drying method, obtaining catalyst precursor particles; adding to the catalyst precursor particles at least one of shaping aid agent, a pore forming agent, a peptizing agent, a diluent, and combinations thereof, forming a batch mixture; shaping the batch mixture forming a shaped catalyst precursor; sulfiding the shaped catalyst precursor forming the bulk multi-metallic catalyst.

Also disclosed herein is a process to prepare a multi-metallic catalyst composition for hydrotreating a hydrocarbon feed. The process comprising:
providing at least a Group VIII metal precursor M^{VIB} and at least promoter metal precursor M^{P}, the promoter metal precursor M^{P} is selected from the group of Group VIII, Group IIB, Group IIA, Group IVA and combinations thereof; has an oxidation state of either +2 or +4; combining the at least a Group VIII and the at least a promoter metal precursor to form a catalyst precursor precipitate in a liquid solution; separating the catalyst precursor precipitate from the liquid solution forming a filter cake; treating the filter cake with at least a ligating agent forming a chelated catalyst precursor; drying and shaping the chelated catalyst precursor, forming a shaped catalyst precursor; and
sulfiding the shaped catalyst precursor forming the bulk multi-metallic catalyst.

### BRIEF DESCRIPTION OF THE DRAWING

Figure 1 is block diagram showing an embodiment of a process for making a multi-metallic catalyst.

### DETAILED DESCRIPTION

The following terms will be used throughout the specification and will have the following meanings unless otherwise indicated.

SCF / BBL (or scf / bbl, or scfb or SCFB) refers to a unit of standard cubic foot of gas (N₂, H₂, etc.) per barrel of hydrocarbon feed.

LHSV means liquid hourly space velocity.

The Periodic Table referred to herein is the Table approved by IUPAC and the U.S. National Bureau of Standards, an example is the Periodic Table of the Elements by Los Alamos National Laboratory's Chemistry Division of October 2001.

As used here, the term "bulk catalyst" may be used interchangeably with "unsupported catalyst," meaning that the catalyst composition is NOT of the conventional catalyst form which has a preformed, shaped catalyst support which is then loaded with metals via impregnation or deposition catalyst. In one embodiment, the bulk catalyst is formed through precipitation. In another embodiment, the bulk catalyst has a binder incorporated into the catalyst composition. In yet another embodiment, the bulk catalyst is formed from metal compounds and without any binder.

As used herein, the phrases "one or more of" or "at least one of" when used to preface several elements or classes of elements such as X, Y and Z or X₁-Xₙ, Y₁-Yₙ and Z₁-Zₙ, is intended to refer to a single element selected from X or Y or Z, a combination of elements selected from the same common class (such as X₁ and X₂), as well as a combination of elements selected from different classes (such as X₁, Y₂ and Zn).

As used herein, "hydroconversion" or "hydroprocessing" is meant any process that is carried out in the presence of hydrogen, including, but not limited to, methanation, water gas shift reactions, hydrogenation, hydrotreating, hydrodesulphurization, hydrodenitrogenation, hydrodemetallation, hydrodearomatization, hydroisomerization, hydrodewaxing and hydrocracking including selective hydrocracking. Depending on the type of hydroprocessing and the reaction conditions, the products of hydroprocessing can show improved viscosities, viscosity indices, saturates content, low temperature properties, volatilities and depolarization, etc.

As used herein, 700°F+ conversion rate refers to the conversion of an oil feedstock having a boiling point of greater than 700°F+ to less than 700° F (371.°C) boiling point materials in a hydroconversion process, computed as (100% * (wt. % boiling above 700°F materials in feed - wt. % boiling above 700°F materials in products) / wt. % boiling above 700°F materials in feed)).

As used herein, "LD50" is the amount of a material, given all at once, causes the death of 50% (one half) of a group of test animals. LD-50 measures the short-term poisoning potential (acute toxicity) of a material with the testing being done with smaller animals such as rats and mice (in mg/Kg).

As used herein, "shaped catalyst precursor" means catalyst precursor formed (or shaped) by spray drying, pelleting, pilling, granulating, beading, tablet pressing, bricketting, using compression method via extrusion or other means known in the art or by the agglomeration of wet mixtures. The shaped catalyst precursor can be in any form or shape, including but not limited to pellets, cylinders, straight or rifled (twisted) trilobes, multiholed cylinders, tablets, rings, cubes, honeycombs, stars, tri-lobes, quadra-lobes, pills, granules, etc.

As used herein, pores are classified according to size into three categories; micropores (dimension smaller than 3.5 nm), mesopores (dimension ranging from 3.5 - 500 nm) and macropores (dimension larger than 500 nm).

Pore porosity and pore size distribution in one embodiment are measured using mercury intrusion porosimetry, designed as ASTM standard method D 4284. In another embodiment, pore porosity and size distribution are measured via the nitrogen adsorption method. Unless indicated otherwise, pore porosity is measured via the mercury intrusion method.

Catalyst Product: The hydroconversion bulk catalyst having low volume shrinkage herein is formed from a catalyst precursor. The precursor is converted into a catalyst (becoming catalytically active) upon sulfidation, e.g., for subsequent use in hydrodesulfurization (HDS), hydrodearomatization (HDA), and hydrodenitrification (HDN) processes. The starting material, i.e., catalyst precursor, is a hydroxide material, prepared from at least a Promoter metal and a Group VIB metal precursors. The metal precursors can be in either elemental or compound form.

Also described herein is a catalyst prepared from a catalyst precursor in the form of a bulk multi-metallic oxide comprising of at least one Group VIII non-noble material and at least two Group VIB metals, the ratio of Group VIB metal to Group VIII non-noble metal ranges may be from about 10:1 to about 1:10. The oxide catalyst precursor may be of the general formula: (X)_{b}(Mo)_{c}(W)_{d}O_{z}; wherein X is Ni or Co, the molar ratio of b: (c+d) is 0.5/1 to 3/1, the molar ratio of c: d is > 0.01/1, and z = [2b + 6 (c + d)]/2. The oxide catalyst precursor may further comprise one or more ligating agents L. The term "ligand" may be used interchangeably with "ligating agent," "chelating agent" or "complexing agent" (or chelator, or chelant), referring to an additive that combines with metal ions, e.g., Group VIB and / or Promoter metals, forming a larger complex, e.g., a catalyst precursor.

Also described herein is a catalyst prepared from a catalyst precursor in the form of a hydroxide comprising of at least one Group VIII non-noble material and at least two Group VIB metals. The hydroxide compound may be of the general formula Aᵥ[(M^{P})(OH)ₓ(L)ⁿ_{y}]_{z}(M^{VIB}O₄), wherein A is one or more monovalent cationic species, M refers to at least a metal in their elemental or compound form, and L refers to one or more ligating agents.

Also described herein is a catalyst prepared from a catalyst precursor with the inclusion of at least a diluent, the precursor is of the formula Aᵣ[(M^{IIA})ₛ(M^{VIII})ₜ(Al)ᵤ (OH)ᵥ(L)_{w}]ₓ(Si_{(1-y)}Al_{y}O₂)_{z}(M^{VIB}O₄), wherein A is one or more monovalent cationic species, M^{IIA} is one or more group IIA metals, M^{VIII} is one or more Group VIII metals, Al is aluminum, L is one or more ligating agents, (Si_{(1-y)}Al_{y}O₂) is a silica-alumina moiety, M^{VIB} is one or more Group VIB metals with the atomic ratio of M^{VIII}: M^{VIB} between 100:1 and 1:100.

In one embodiment, A is at least one of an alkali metal cation, an ammonium, an organic ammonium and a phosphonium cation. In one embodiment, A is selected from monovalent cations such as NH4+, other quaternary ammonium ions, organic phosphonium cations, alkali metal cations, and combinations thereof.

In one embodiment, L is one or more ligating agents. In another embodiment, L is charge neutral or has a negative charge n <= 0. In another embodiment, L is a non-toxic organic oxygen containing ligating agent with an LD50 rate (as single oral dose to rats) of greater than 500 mg/Kg. The term "charge-neutral" refers to the fact that the catalyst precursor carries no net positive or negative charge. In one embodiment, ligating agents include both polydentate as well as monodentate, e.g., NH₃ as well as alkyl and aryl amines. Other examples of ligating agents L include but are not limited to carboxylates, carboxylic acids, aldehydes, ketones, the enolate forms of aldehydes, the enolate forms of ketones, and hemiacetals, and combinations thereof. The term "carboxylate" refers to any compound containing a carboxylate or carboxylic acid group in the deprotonated or protonated state. In another embodiment, L is selected from the group of organic acid addition salts such as formic acid, acetic acid, propionic acid, maleic acid, malic acid, cluconic acid, fumaric acid, succinic acid, tartaric acid, citric acid, oxalic acid, glyoxylic acid, aspartic acid, alkane sulfonic acids such as methane sulfonic acid and ethane sulfonic acid, aryl sulfonic acids such as benzene sulfonic acid and p-toluene sulfonic acid and arylcarboxylic acids; carboxylate containing compounds such as maleate, formate, acetate, propionate, butyrate, pentanoate, hexanoate, dicarboxylate, and combinations thereof.

M^{P} is at least a promoter metal. In one embodiment, M^{P} has an oxidation state of either +2 or +4 depending on the Promoter metal(s) being employed. M^{P} is selected from Group VIII, Group IIB, Group IIA, Group IVA and combinations thereof. In one embodiment, M^{P} is at least a Group VIII metal and M^{P} has an oxidation state P of +2. In another embodiment, M^{P} is selected from Group IIB, Group IVA and combinations thereof. In one embodiment, the Promoter metal M^{P} is at least a Group VIII metal with M^{P} having an oxidation state of +2 and the catalyst precursor is of the formula Aᵥ[(M^{P})(OH)ₓ(L)ⁿ_{y}]_{z}(M^{VIB}O₄) to have (v - 2 + 2 z - x * z + n * y * z) = 0. In one embodiment, the Promoter metal M^{P} is a mixture of two Group VIII metals such as Ni and Co. In yet another embodiment, M^{P} is a combination of three metals such as Ni, Co and Fe. In one embodiment where M^{P} is a mixture of two group IIB metals such as Zn and Cd, the catalyst precursor is of the formula Aᵥ[(ZnₐCd_{a'})(OH)ₓ(L)_{y}]_{z}(M^{VIB}O⁴). In yet another embodiment, M^{P} is a combination of three metals such as Zn, Cd and Hg, and the catalyst precursor is of the formula Aᵥ[(ZnₐCd_{a'}Hg_{a")}(OH)ₓ(L)_{ny}]_{z}(M^{VIB}O⁴⁾.

In one embodiment, the Promoter metal M^{P} is selected from the group of IIB and VIA metals such as zinc, cadmium, mercury, germanium, tin or lead, and combinations thereof, in their elemental, compound, or ionic form. In yet another embodiment, the Promoter metal M^{P} further comprises at least one of Ni, Co, Fe and combinations thereof, in their elemental, compound, or ionic form. In another embodiment, the Promoter metal is a Group IIA metal compound, selected from the group of magnesium, calcium, strontium and barium compounds which are at least partly in the solid state, e.g., a water-insoluble compound such as a carbonate, hydroxide, fumarate, phosphate, phosphite, sulphide, molybdate, tungstate, oxide, or mixtures thereof.

In one embodiment, M^{VIB} is at least a Group VIB metal having an oxidation state of +6. In one embodiment, M^{P:MVIB} has an atomic ratio between 100:1 and 1:100. v - 2 + P * z - x * z + n * y * z = 0; and 0 ≤ y ≤ -P/n; 0 ≤ x ≤ P; 0 ≤ v ≤ 2; 0 ≤ z. In one embodiment, M^{VIB} is molybdenum.

In yet another embodiment, M^{VIB} is a mixture of at least two Group VIB metals, e.g., molybdenum and tungsten.

Methods for Making Catalyst: In one embodiment, the catalyst prepared has a low volume shrinkage in hydroprocessing operations, in combination with high mechanical strength and improved performance, i.e., providing high yield conversions. The low shrinkage results from the controlled / optimization of the thermal treatment of the catalyst precursor.

Reference will be made to Figure 1, which is a block diagram schematically illustrating an embodiment of a general process for making a multi-metallic catalyst.

Forming a Precipitate or Cogel: The first step **10** in the process is a precipitation or cogellation step, which involves reacting in a mixture of the metal precursors **11,** e.g., Promoter metal component(s) and the Group VIB metal component to obtain a precipitate or cogel. The term "cogel" refers to a co-precipitate (or precipitate) of at least two metal compounds. The metal precursors can be added to the reaction mixture as a solid, in solution, suspension, or a combination thereof. If soluble salts are added as such, they will dissolve in the reaction mixture and subsequently be precipitated or cogelled, or forming a suspension. The solution can be heated optionally under vacuum to effect precipitation and evaporation of the liquid.

The precipitation (or cogelation) is carried out at a temperature and pH under which the Promoter metal compound and the Group VIB metal compound precipitate or form a cogel. In one embodiment, the temperature at which the cogel is formed is between 25 - 350°C. In one embodiment, the catalyst precursor is formed at a gauge pressure between 0 to 3000 psi (0-21 MPa). In a second embodiment, between 10 to 1000 psi (0.07 to 7 MPa). In a third embodiment, between 30 to 100 psi (0.2 to 0.7 MPa). The pH of the mixture can be changed to increase or decrease the rate of precipitation or cogelation' depending on the desired characteristics of the product. In one embodiment, the mixture is left at its natural pH during the reaction step(s). In another embodiment' the pH is maintained in the range of 0 - 12. In another embodiment, the pH is maintained in the range of 7 - 10. Changing the pH can be done by adding base or acid 12 to the reaction mixture, or adding compounds, which decompose upon temperature increase into hydroxide ions or H⁺ ions that respectively increase or decrease the pH. In another embodiment, adding compounds which participate in the hydrolysis reaction. Examples of compounds to be added for pH adjustment include but are not limited to urea, nitrites, ammonium hydroxide, mineral acids, organic acids, mineral bases, and organic bases.

In one embodiment, at least a ligating agent L can be optionally added prior to or after precipitation or cogellation of the promoter metal compounds and/or Group VIB metal compounds, i.e., the ligating agent L can be added to the metal precursors as one of the reagents forming the precipitate, or it can be added after the precipitate is formed.

In one embodiment, it is observed that the incorporation of the ligating agent L significantly increase the porosity of the catalyst precursor. In one embodiment, a chelated catalyst precursor shows a macropore volume of at least 10% greater than an un-chelated catalyst precursor. In a second embodiment, the macropore volume increase is at least 20%.

In one embodiment, instead of or in addition to the ligating agent L, diluent amounts from 5-95 wt. % of the total composition of the catalyst precursor can also be added to this step, depending on the envisaged catalytic application. These materials can be applied before or after the precipitation or cogelation of the metal precursors. Examples of diluent materials include zinc oxide; zinc sulfide; niobia; tetraethyl orthosilicate; silicic acid; titania; silicon components such as sodium silicate, potassium silicate, silica gels, silica sols, silica gels, hydronium- or ammonium-stabilized silica sols, and combinations thereof; aluminum components useful in the process of the present invention include, but are not limited to, sodium aluminate, potassium aluminate, aluminum sulfate, aluminum nitrate, and combinations thereof; magnesium components such as magnesium aluminosilicate clay, magnesium metal, magnesium hydroxide, magnesium halides, magnesium sulfate, and magnesium nitrate; zirconia; cationic clays or anionic clays such as saponite, bentonite, kaoline, sepiolite or hydrotalcite, or mixtures thereof. In one embodiment, titania is used as a diluent in an amount of greater than 50 wt. %, on a final catalyst precursor basis (as an oxide or hydroxide).

Liquid Removal: In the next step **20,** at least 50 wt. % of liquid (supernatant / water) is removed from the precipitate (or suspension) via separation processes known in the art, e.g., filtering, decanting, centrifuging, etc. In one embodiment, liquid in the precipitate is removed via filtration with vacuum techniques or equipment known in the art, giving a wet filter cake. A wet filter cake is generally defined as filter cake having approximately 10 to 50 wt. % liquid, thus being generally free of water or other solvent such as methanol and the like.

In one embodiment, optional drying of the filter cake is performed under atmospheric conditions or under an inert atmosphere such as nitrogen, argon, or vacuum, and at a temperature sufficient to remove water but not removal of organic compounds. In one embodiment, the drying is performed at about 50 to 120°C until a constant weight of the catalyst precursor is reached. In another embodiment, the drying is done at a temperature between 50°C to 200°C for a period ranging from ½ hour to 6 hours. Drying can be done via thermal drying techniques known in the art, e.g., flash drying, belt drying, oven drying, etc.

Post Precipitate Ligating: In one embodiment with an optional chelating step **26,** the catalyst precursor precipitate is treated with at least a ligating agent L. In one embodiment, chelating is carried out by passing organic ligating agents / solvent vapor through the filter cake. In another embodiment, which is a more effective way of incorporating ligating agents, the filter cake is washed in a solution containing the ligating agent. The ligating agent used herein can be the same or different from any ligating agent that may have been used / incorporated into the metal precursors (reagents) in the precipitating step.

In one embodiment, a catalyst precursor incorporating a ligating agent applied post precipitate forming shows a total pore volume of at least 25% greater than a catalyst precursor that is chelated in the process of forming the precipitate, e.g., with the ligating agent(s) being added to one of the metal precursors or to the mixture of metal precursors, prior to or during the formation of the precipitate. In a second embodiment, the total pore volume increase is at least 40%. In a third embodiment, the total pore volume increase is at least 50%.

It is believed that in the post precipitate chelating step (after the formation of the precursor precipitate), the ligating agent provides the precursor precipitate with additional high specific surface area for the subsequent sulfiding step. It is also believed that in some embodiments, the ligating agent changes the surface charge of the precursor, which subsequently helps in keeping the particles separate (less clumped together) in the drying step, for a catalyst with higher porosity.

Non-Agglomerative Drying: "Non-agglomerative drying" means a drying process in which particle agglomeration is substantially prevented. For example, examination of the catalyst particle size in a wet centrifuge cake indicates that the median particle size may be in the range of 1 to 3 µm. However, after drying such a cake in the conventional manner, oven drying or tray drying, the resulting median size of the particle is much larger as the particles remain stuck together / clump up of more than 40 times the initial size. In some embodiments of tray drying, the filter cake dries out forming clumps or chunks (green body), requiring subsequent milling to reduce the particle size of the precursor.

The filter cake is dried via a non-agglomerative drying process **26.** In the non-agglomerative drying process, significant agglomeration is prevented with less clumping or with clumping of smaller sizes. In one embodiment, the non-agglomerative drying produces particles having a median size of less than 20 times the median size of the pre-drying particles. In another embodiment, the median size is less than 10 times the median size of the pre-drying particles. In a third embodiment, the non-agglomerative drying produces particles having a median size of less than 5 times the median size of the particles pre-drying.

Non-agglomerative drying methods are selected from flash drying, freeze drying, and fluidized bed drying, for example the moisture content may be reduced to less than 15%. In one embodiment, the moisture content is reduced to less than 10%. In a third embodiment, to less than 5%. In a fourth embodiment, to less than 2%. In one embodiment, after non-agglomerative drying, the dried catalyst precursor has a median particle size of less than 40 µm.

In one embodiment, after a substantial amount of liquid is removed from the precipitate generating a wet filter cake, the wet filter cake undergoes non-agglomerative drying **26** in a flash drying process. In another embodiment (as shown by dotted lines), the wet filter cake is first chelated before the non-agglomerative drying step. In one embodiment, the filter cake is flash-dried at an air (or nitrogen) temperature of 70° C. to 250° C. in a period of less than 60 seconds. In another embodiment, the wet filter cake undergoes fluidized bed drying, wherein the particles surface area is exposed to the high volume air stream with the heat being transferred to the product surface by convection in a short period of time, cutting down on particle agglomeration. Fluidized bed drying takes longer than flash drying, but still allows the precursor particles to dry in a matter of minutes instead of hours as in tray drying or oven drying and with substantially less clumping.

In comparative tests between tray dried samples (150°F between 2 to 4 hrs.) and flash dried samples, it is found that the flash dried precursors have a total pore volume (via mercury prosimeter) of at least 2 times the tray dried precursors. In another embodiment, the flash dried precursors have a total pore volume of at least 3 times the tray dried precursors.

Forming Catalyst Precursor Mix For Shaping: In this step **30,** the filter cake is mixed together with water and other optional materials including but not limited to shaping aids **32,** peptizing agents, pore forming agents, and diluent materials **13.** In one embodiment, rework material in the form of filter cake material, extrudable dough and / or dry particles / pieces of precursor materials from previous runs can be optionally included the materials to form a new batch of catalyst precursor mix.

The precursor batch mixture is mixed for a sufficient period of time to obtain a mixture that is substantially uniform or homogeneous. The mixing time depends on the type and efficiency of the mixing technique, e.g., milling, kneading, slurry mixing, dry or wet mixing, or combinations thereof and the mixing apparatus used, e.g., a pug mill, a blender, a double-arm kneading mixer, a rotor stator mixer, or a mix muller. In one embodiment, the mixing time ranges from 0.1 to 10 hours.

In one embodiment, a shaping aid agent is added in a ratio of between 100:1 and 10:1 (wt. % catalyst precursor to wt. % shaping aid). In one embodiment, the shaping aid agent is selected an organic binder of the cellulose ether type and / or derivatives. Examples include methylcellulose, hydroxybutylcellulose, hydrobutyl methylcellulose, hydroxyethylcellulose, hydroxymethylcellulose, hydroxypropylcellulose, hydroxypropyl methylcellulose, hydroxyethyl methylcellulose, sodium carboxy methylcellulose, and mixtures thereof. In another embodiment, the shaping aid is a polyakylene glycol such as polyethylene glycol (PEG). In yet another embodiment, shaping aids are selected from saturated or unsaturated fatty acid (such as politic acid, satiric acid or oleic acid) or a salt thereof, a polysaccharide derived acid or a salt thereof, graphite, starch, alkali stearate, ammonium stearate, stearic acid, mineral oils, and combinations thereof.

In one embodiment, a peptizing agent may be added to the mixture. The peptizing agent may be an alkali or an acid, e.g., ammonia, formic acid, citric acid, nitric acid, maleic acid, carboxylic acid, etc. In one embodiment whether the catalyst precursor material is to be spray-dried, ammonia solution from 10 to 28% strength can be added in amounts of from 50 to 150 ml per 100 g of spray-dried material. In another embodiment, acids can be employed in the form of aqueous solutions of from 2 to 4% strength, in amounts of from 10 to 20 ml per 100 g of spray-dried material.

In another embodiment, a pore forming agent is also added to the mixture along with the rework. Examples of pore forming agents include but are not limited to mineral oils, steric acid, polyethylene glycol polymers, carbohydrate polymers, methacrylates, cellulose polymers, and carboxylates which decompose upon being heated. Examples of commercially available cellulose based pore forming agents include but are not limited to: Methocel™ (available from Dow Chemical Company), Avicel™ (available from FMC Biopolymer), Morwet™ (from Witco) and Porocel™ (available from Porocel).

In yet another embodiment, diluent materials can be added. The diluent materials added in this step can be the same as or different from any diluent materials that may have been added to the step of forming the precipitate from metal precursors above.

In one embodiment wherein the catalyst precursor is to be shaped via pelletizing, extrusion, or pressing, a sufficient amount of water is added to the mixing batch to adjust the batch viscosity to a convenient level for plasticizing and shaping, i.e., a mixture of dough consistency. In one embodiment, a sufficient amount of water is added for the mixture to have between 50 to 90 % solids (LOI). In another embodiment, between 60 to 70 % solids (LOI).

Shaping Process: In this step **40,** the catalyst precursor mix is shaped into formed particles, such as spheroids, pills, tablets, cylinders, irregular extrusions, merely loosely bound aggregates or clusters, etc., using any of the methods known in the art including pelletizing, extrusion, tableting, molding, tumbling, pressing, spraying and spray drying.

In one embodiment, a shaped catalyst precursor is formed via extrusion, using extrusion equipment known in the art, e.g., single screw extruder, ram extruder, twin-screw extruder, etc. In another embodiment, the shaping is done via spray drying at an outlet temperature ranging from 100°C to 320°C. In one embodiment, shaped catalyst precursor is extruded into extrudate having a diameter from about 1/16 to 1/6 of an inch (1.6 mm to 4.2 mm). After extrusion the extrudate can be cut to suitable lengths, e.g., 1/16-inch to 5/16-inch (1.6 mm to 7.9 mm), to produce cylindrical pellets.

Thermal Treatment: In one embodiment, the shaped catalyst precursor undergoes a thermal treatment step **50.** In one embodiment, the catalyst precursor is air (or nitrogen) dried in a directly or indirectly heated oven, tray drier, or belt drier at about 50°C. to 200°C. for about 15 minutes to 12 hours, and wherein the temperature is room temperature to drying temperature at a rate of 1-50 °C. per minute. In one embodiment, the temperature is ramped up at a slow rate of 1-2°C. per minute. In a second embodiment, air drying is performed at a fast ramp up rate of at least 25°C. per minute. In one embodiment, the drying is at a temperature at or below 100°C.

Generally, it is known that the higher temperature of the heat treatment, the higher the densities of the catalyst precursor and therefore, upon sulfidation, resulting in a catalyst that also has a low shrinkage rate. An analogous example is in ceramic technology. In some embodiments, it is unexpected that low (less than 10%) volumetric shrinkage is still obtained with the thermal treatment at a low temperature, e.g., less than 325°C, less than 200°C, and even at a temperature at or below 100°C.

In one embodiment, after the thermal treatment, the shaped catalyst can be optionally calcined at a temperature in the range of about 350°C. to 750°C in a suitable atmosphere, e.g., inerts such as nitrogen or argon, or steam. In yet another embodiment, the calcination is carried out at a temperature between 350°C. to 600°C. In the calcination process, the catalyst precursor gets converted into an oxide. In one embodiment, the oxide catalyst precursor is of the general formula: (X)_{b}(Mo)_{c}(W)_{d}O_{z}; wherein X is Ni or Co, the molar ratio of b: (c+d) is 0.5/1 to 3/1, the molar ratio of c: d is > 0.01/1, and z = [2b + 6 (c + d)]/2.

In one embodiment, the catalyst precursor is nitrogen stable. As used herein, the term nitrogen stable means that the properties (after the catalyst precursor is sulfided to form a catalyst) are not affected by the drying agent, i.e., whether drying in a nitrogen or oxygen environment.

Sulfiding Step: The shaped catalyst precursor (with optional rework materials) can be sulfided in a sulfiding step **60** to form an active catalyst, with the use of at least a sulfiding agent **62** selected from the group of: elemental sulfur by itself; a sulfur-containing compound which under prevailing conditions, is decomposable into hydrogen sulphide; H₂S by itself or H₂S in any inert or reducing environment, e.g., H₂. Examples of sulfiding agents include ammonium sulfide, ammonium polysulfide ([(NH₄)₂Sₓ), ammonium thiosulfate ((NH₄)₂S₂O₃), sodium thiosulfate Na₂S₂O₃), thiourea CSN₂H₄, carbon disulfide, dimethyl disulfide (DMDS), dimethyl sulfide (DMS), dibutyl polysulfide (DBPS), mercaptanes, tertiarybutyl polysulfide (PSTB), tertiarynonyl polysulfide (PSTN), and the like. In one embodiment, hydrocarbon feedstock is used as a sulfur source for performing the sulfidation of the catalyst precursor.

In the sulfiding step, shaped catalyst precursor is converted into an active catalyst upon contact with the sulfiding agent at a temperature ranging from 25°C. to 500°C, from 10 minutes to 15 days, and under a H₂-containing gas pressure. The total pressure during the sulfidation step can range between atmospheric to about 10 bar (1MPa). If the sulfidation temperature is below the boiling point of the sulfiding agent, the process is generally carried out at atmospheric pressure. Above the boiling temperature of the sulfiding agent / optional components (if any), the reaction is generally carried out at an increased pressure.

Use of the Catalyst: As catalyst precursors sometimes can be sulfided in-situ, e.g., in the same hydrotreating reactors during hydrotreatment, catalyst performance can be characterized by the properties of the catalyst precursors before sulfidation.

In one embodiment, a catalyst's stability can be evaluated based on the residual geometric volume shrinkage of the catalyst precursor. This is measured as the change in the geometric volume of the shaped catalyst precursor before and after it is sulfided. In the sulfidation process, the catalyst precursors are exposed to a high temperature of up to 500°C. In this step, shrinkage is expected as the oxide / hydroxide precursor is converted into a sulfided catalyst. The volumetric shrinkage measured after the sulfidation step can be used as an indication of a catalyst's mechanical integrity under severe hydroprocessing conditions, as precursors are often sulfided in-situ in the same reactor as the hydroprocessing reactor.

The bulk multi-metallic catalyst is prepared by sulfiding a catalyst precursor having a residual geometric volume shrinkage of less than about 12% upon exposure to a temperature of at least 100°C. for at least 30 minutes in a sulfiding step. In a second embodiment, the volume shrinkage is less than about 10%. In a third embodiment, the volume shrinkage is less than about 8%. In a fourth embodiment, less than 5%. In yet another embodiment, the volume shrinkage is less than about 10% upon exposure to a temperature of at least 200°C. for at least 30 minutes. In a fifth embodiment, the volume shrinkage is less than about 10% upon exposure to a temperature of at least 250°C. for at least 30 minutes. Volumetric changes can be measured indirectly via the catalyst precursor's compact bulk density (CBD).

In one embodiment, the catalyst precursor for preparing the bulk catalyst is characterized as having essentially a monomodal pore size distribution with a substantial portion of the pores being macropores. As used herein, essentially monomodal pore size distribution means that more than 90% of the pores being macropores, and less than 10% as mesopores. In one embodiment, the catalyst precursor has a pore distribution such that more than 95% of the pore volume is presented as macropores. In another embodiment, more than 97% of the pore volume is present as macropores. In yet another embodiment, more than 99% of the pores are macropores. Mesopores if present have a pore volume ranging from 0.005 to 0.01 cc/g. In one embodiment, the catalyst precursor is characterized as having a total pore volume ranging from 0.08 to 2.0 cc/g. In another embodiment, the total pore volume ranges from 0.10 to 1. cc/g. In a third embodiment, the total pore volume is at least 0.12 cc/g. In a fourth embodiment for a catalyst precursor that is post precipitate ligated, the total pore volume is at least 0.15 cc/g.

As the catalyst precursor and the sulfided bulk metallic catalyst formed therefrom have sufficient macropore sites and large pore volume to overcome the diffusion limitations of heavy petroleum feeds, the bulk metallic catalyst in one embodiment is particularly suitable for hydrotreating heavy petroleum feeds having an atmospheric residue (AR) boiling point in the range of 343°C. (650°F.) - to 454 °C. (850 °F.) and particularly above 371°C. (700°F.). Heavy oil feeds having a boiling point greater than 343°C. (650°F.) are commonly characterized as having relatively high specific gravity, low hydrogen-to-carbon ratios, and high carbon residue. They contain large amounts of asphaltenes, sulfur, nitrogen and metals, which increase hydrotreating difficulty with their large molecular diameter.

In one embodiment with the monomodal distribution of primarily masopores (macropore sites), the bulk catalyst is particularly suited for hydrotreating heavy petroleum feeds having an average molecular diameter ranging from 0.9 nm to 1.7 nm (9 to 17 angstrom), providing an HDN conversion level of > 99.99% (700°F+ conversion), lowering the sulfur level in fraction above 700°F (371°C). boiling point to less than 20 ppm in one embodiment, and less than 10 ppm in a second embodiment. In one embodiment, the bulk catalyst is particularly suited for hydrotreating a heavy petroleum feed having an average molecular diameter ranging from 0.9 nm to 1.7 nm. In yet another embodiment, the bulk catalyst is particularly suitable for treating a heavy oil feed having an average molecular weight Mn ranging from 300 to 400 g/mole.

In one embodiment, the precursor for forming the catalyst also exhibits other desirable properties, including a compact bulk density (CBD) of at most 1.6 g/cc; a pore volume measured using nitrogen adsorption up to 95 nm on the BET adsorption curve of 0.002 to 2.0 cm³/g; a crush strength of at least about 1.8 kg (4 lbs); and an attrition loss of less than 7 wt.%. Attrition loss is the loss to fine amount measured when tumbled one-half hour in a rotating drum.

In one embodiment, the catalyst precursor has a pore volume of less than 1.0 cm³/g. In another embodiment, the attrition loss is less than 5 wt. %. In a third embodiment, the CBD is at most 1.4 g/cc. In a fourth embodiment, the CBD is at most 1.2 g/cc. In a fifth embodiment, a CBD in the range of 1.2 g/cc to 1.4 g/cc. In one embodiment, the crush strength is at least 2.7 kg (6 lbs).

In one embodiment, the catalyst precursor has a particle density of equal or less 2.5 g/cc. In another embodiment, the particle density is equal or less than 2.2 g/cc.

In one embodiment, the catalyst precursor is characterized has having a surface area measured by the BET method, using nitrogen as adsorbate, ranging from 40 to 400 m²/g. In a second embodiment, a surface area ranging from 60 to 300 m²/g. In a third embodiment, a surface area ranging from 100 to 250 m²/g. In one embodiment, the catalyst precursor has a combined high surface area and high volume pore with a surface area of at least 150 m²/g.

The bulk multi-metallic catalyst can be used in virtually all hydroprocessing processes to treat a plurality of feeds under wide-ranging reaction conditions such as temperatures of from 200 to 450°C., hydrogen pressures of from 15 to 300 bar, liquid hourly space velocities of from 0.05 to 10 h⁻¹ and hydrogen treat gas rates of from 35.6 to 2670 m³ / m³ (200 to 15000 SCF/B - or "Standard Cubic Feet per Barrel" of hydrocarbon compound feed to the reactor). The catalyst is also characterized by excellent catalytic activity, as giving an almost full HDN conversion rate (> 99.99%) in the hydrotreating of heavy oil feedstock such as VGO.

EXAMPLES: The following illustrative examples are intended to be nonlimiting.

Example 1 Ni-Mo-W-maleate catalyst precursor. A catalyst precursor of the formula (NH₄) {[Ni_{2.6}(OH)_{2.08}(C₄H₂O₄²⁻)_{0.06}](Mo_{0.35}W_{0.65}O₄)₂} was prepared as follows: 52.96g of ammonium heptamolybdate (NH₄)₆Mo₇O₂₄·4H₂O was dissolved in 2.4L of deionized water at room temperature. The pH of the resulting solution was within the range of 2-3. 52.96g of ammonium heptamolybdate (NH₄)₆Mo₇O₂₄·4H₂O was dissolved in the above solution. The pH of the resulting solution was within the range of 5-6. 73.98g of ammonium metatungstate powder was then added to the above solution and stirred at room temperature until completely dissolved. 90ml of concentrated (NH₄)OH was added to the solution with constant stirring. The resulting molybdate / tungstate solution was stirred for 10 minutes and the pH monitored. The solution had a pH in the range of 9-10. A second solution was prepared containing 174.65g of Ni(NO₃)₂·6H₂O dissolved in 150ml of deionized water and heated to 90°C. The hot nickel solution was then slowly added over 1 hr to the molybdate/ tungstate solution. The resulting mixture was heated to 91°C and stirring continued for 30 minutes. The pH of the solution was in the range of 5-6. A blue-green precipitate formed and the precipitate was collected by filtration. The precipitate was dispersed into a solution of 10.54g of maleic acid dissolved in 1.8L of DI water and heated to 70°C. The resulting slurry was stirred for 30 min. at 70°C, filtered, and the collected precipitate vacuum dried at room temperature overnight. The material was then further dried at 120°C for 12hr. The resulting material has a typical XRD pattern with a broad peak at 2.5Å, denoting an amorphous Ni-OH containing material. The BET Surface area of the resulting material was 101 m²/g, the average pore volume was around 0.12 - 0.14 cc/g, and the average pore size was around 5nm.

Example 2 Ni-Mo-W catalyst precursor. A catalyst precursor of the formula (NH₄) {[Ni_{2.6}(OH)_{2.08}](Mo_{0.35}W_{0.65}O₄)₂} was prepared as follows: 52.96g of ammonium heptamolybdate (NH₄)₆Mo₇O₂₄·4H₂O was dissolved in 2.4L of deionized water at room temperature. The pH of the resulting solution was within the range of 5-6. 73.98g of ammonium metatungstate powder was then added to the above solution and stirred at room temperature until completely dissolved. 90ml of concentrated (NH₄)OH was added to the solution with constant stirring. The resulting molybdate / tungstate solution was stirred for 10 minutes and the pH monitored. The solution had a pH in the range of 9-10. A second solution was prepared containing 174.65g of Ni(NO₃)₂·6H₂O dissolved in 150ml of deionized water and heated to 90°C. The hot nickel solution was then slowly added over 1 hr to the molybdate/ tungstate solution. The resulting mixture was heated to 91°C and stirring continued for 30 minutes. The pH of the solution was in the range of 5-6. A blue-green precipitate formed and the precipitate was collected by filtration, giving a filter cake.

Example 3: The precipitate from Example 2 was dispersed into a solution of 10.54g of maleic acid dissolved in 1.8L of DI water and heated to 70°C. The resulting slurry was stirred for 30 min. at 70°C, filtered, and the collected precipitate vacuum dried at room temperature overnight. The material was then further dried at 120°C for 12hr. The resulting material has a typical XRD pattern with a broad peak at 2.5Å, denoting an amorphous Ni-OH containing material. The BET Surface area of the resulting material was 101 m²/g, the average pore volume was around 0.12 - 0.14 cc/g, and the average pore size was around 5nm.

Example 4 Ni-Mo-W maleate catalyst precursor - post precipitate chelating The precipitate of Example 2 was dispersed into a solution of 10.54g of maleic acid dissolved in 1.8L of DI water and heated to 70°C. The resulting slurry was stirred for 30 min. at 70°C then filtered.

Example 5 - Agglomerative vs. Non-agglomertive Drying of Filter Cake. The catalyst precursor of Examples 1- 2 in the form of filter cake (having about 50% moisture, particle size averaging 1.66 µm D50 and maximum of 7.5 µm) was flash dried in a 2" (5cm) ThermaJet dryer with a 600°F (315°C) inlet temperature and 220 - 325°F (104-163°C) outlet temperature, less than 1 residence time of less than 1 minute, giving apowder having about 8 to 10% moisture. The Ni-Mo-W precursor of Example 2 was also tray-dried at about 150°F (66°C) for 2 to 4 hours. Table 1 contains results comparing tray-drying vs. flash-drying for the Ni-Mo-W precursor of Example 2:

**Table 1:**

| Ni-Mo-W Sample | Surface area m²/g | N₂ pore volume cc/g | Hg (total) pore volume cc/g | Microporosity* Pore volume cc/g | Macroporosity pore volume cc/g |
|---|---|---|---|---|---|
| flash-dried | 152 | 0.106 | 0.314 | 0.003 | 0.266 |
| tray-dried | 70 | 0.075 | 0.108 | 0.005 | 0.027 |

| | | | | | |
|---|---|---|---|---|---|
| * nil - amount measured within instrumental error | | | | | |

Example 6 - Forming Shaped Catalyst Precursors. In this example, 40 g of dried catalyst precursor prepared as per examples 1 - 2 was mixed with 0.8g of methocel, (a commercially available methylcellulose and hydroxypropyl methylcellulose polymer from Dow Chemical Company), and approximately 7g of DI water was added. Another 7g of water was slowly added until the mixture was of an extrudable consistency. The mixture was extruded using any of a double barrel Wolf extruder with a 27 ½" (70 cm) screw and full-length of 33 ½" (85 cm) and with 1/16" (1.6 mm) die. The extrudate was cut into pellets with length of about 1/8" to ½" (3 mm to 13 mm).

After extrusion, the catalyst precursor pellets (Ni-Mo-W and Ni-Mo-W-maleate) were dried under N₂ at 120°C, and measured for pore volume and surface area. The results are presented in Table 2 as follows:

**Table 2**

| Samples | Surface area BET m²/g | N₂ meso pore volume cc/g | Hg macro pore volume cc/g | Hg meso pore volume cc/g |
|---|---|---|---|---|
| Ni-Mo-W maleate | 60 | 0.03 | 0.12 | 0.03 |
| Ni-Mo-W | 80 | 0.01 | 0.10 | 0.01 |
| Ni-Mo-W maleate post-precipitate ligating | 96 | 0.03 | 0.18 | 0.03 |

Example 7 - Sulfidation with DMDS gas phase. Two samples of shaped catalyst precursors from Example 6 were placed in a tubular reactor. The temperature was raised to 450°F (232°C) at a rate of 100°F/hr (55°C/hr) under N_{2(g)} at 8 ft³/hr (0.2 m³/hr). The reaction was continued for 1 hour after which time the N₂ was switched off and replaced with H₂ at 8 ft³/hr (0.2 m³/hr) and a gauge pressure of 100 psi (0.69 MPa) for 1 hour. The H₂ gauge pressure was then increased to 300 psi (2 MPa) and maintained for less than 1 hr. after which time dimethyl disulfide (DMDS) was added at a rate of 4 cc/hour and then reaction allowed to proceed for 4 hr. The catalyst precursor was then heated to 600 °F (315°C). and the rate of DMDS addition increased to 8 cc / hr. The temperature was maintained at 600 °F (315°C) for 2 hours after which time sulfidation was complete.

Measurements were taken from 30 catalyst precursor samples of both batches, catalyst precursors prepared from Ni-Mo-W and Ni-Mo-W-maleate precursors, before and after sulfidation. The results are illustrated as follows

**Table 3**

| Catalyst precursor type | Ni-Mo-W precursor | Ni-Mo-W-maleate precursor |
|---|---|---|
| Diameter BEFORE sulfidation | 0.0583" | 0.0594" |
| Diameter AFTER sulfidation | 0.0556" | 0.05402" |
| % shrinkage | 4.68% | 9.11% |

Example 8 - Hydroprocessing Process. The samples from Example 5 were tested under severe hydroprocessing conditions and activities with respect to hydrocracking, HDS, and HDN activity were evaluated, along with the volumetric shrinkage rate. The heavy oil feedstock was a vacuum gas oil (VGO) feedstock with a boiling point above 700°F (371°C), a sulfur content of 31135 ppm, a nitrogen content of 31230 ppm, and other properties as presented in Table 1. The reactor conditions include a pressure of 2300 psi (16 MPa), an H₂ gas rate of 5000 SCFB (900 m³/m³), and an LHSV of 0.75.

**Table 4**

| Properties | VGO Feedstock |
|---|---|
| API Gravity | 20.0 |
| N, ppm | 1100 |
| S, wt % | 2.72 |
| Carbon, wt % | 85.6 |
| | |

| 22 compounds | |
|---|---|
| Aromatics, vol % | 35.0 |
| Naphthenes, vol % | 27.8 |
| Paraffins, vol % | 13.5 |
| Sulfur compounds, vol % | 23.7 |
| | |

| Simdist, wt % | |
|---|---|
| 0.5/5 | 640/689 |
| 10/30 | 717/800 |
| 50/ | 866 |
| 70/90 | 930/1013 |
| 95/99 | 163/1168 |

Results obtained from the run included a 700°F+ (371°C+) conversion of at last 40%, sulfur reduction to less than 10 ppm in the stripper bottoms, N₂ level to less than 25 ppm in the stripper bottoms.

## Claims

1. A method for forming a catalyst from a catalyst precursor having a low volumetric shrinkage, the method comprising:
forming a precipitate comprising at least a promoter metal precursor, at least a Group VIB metal precursor, optionally at least a ligating agent, and optionally at least a diluent, wherein the promoter metal precursor is selected from Group VIII, Group IIB, Group IIA, Group IVA and combinations thereof;
removing at least 50% of liquid from the precipitate forming a filter cake;
drying the filter cake by a non-agglomerative drying method selected from flash drying, freeze drying, and fluidized bed drying;
adding to the filter cake at least one of a shaping aid agent, a pore forming agent, a peptizing agent, a diluent, and combinations thereof, forming a batch mixture;
shaping the batch mixture into a shaped catalyst precursor via any of pelletizing, extrusion, tableting, molding, tumbling, pressing, spraying and spray drying;
drying the shaped catalyst precursor at a temperature ranging from 50°C to 200°C for 15 minutes to 12 hours; and
sulfiding the shaped catalyst precursor forming the bulk multi-metallic catalyst,
wherein the shaped catalyst precursor has a volumetric shrinkage of less than 12% upon sulfiding at a temperature of at least 100°C for at least 30 minutes; and
wherein the catalyst precursor is a hydroxide material.

2. The method of claim 1, wherein the catalyst precursor is of the formula Aᵥ[(M^{P})(OH)ₓ(L)ⁿ_{y}]_{z}(M^{VIB}O₄),
wherein A is at least one of an alkali metal cation, an ammonium, an organic ammonium and a phosphonium cation;
M^{P} is the at least a promoter metal compound, and M^{P} is selected elected from Group VIII, Group IIB, Group IIA, Group IVA and combinations thereof;
L is at the least a ligating agent,
M^{VIB} is the at least a Group VIB metal, having an oxidation state of +6;
M^{P}: M^{VIB} has an atomic ratio of 100:1 to 1:100;
v - 2 + P * z - x * z + n * y * z = 0; and 0 ≤ y ≤ -P/n; 0 ≤ x ≤ P; 0 ≤ v ≤ 2; 0 ≤ z.

3. The method of claim 1, wherein the catalyst precursor has a residual geometric volume shrinkage of less than 10% upon sulfiding at temperature of at least 100°C for at least 30 minutes.

4. The method of claim 1, wherein the catalyst precursor has a total pore volume of at least 0.10 g/cc.

5. The method of claim 1, wherein the catalyst precursor has an essentially monomodal pore size distribution with at least 95% of the pores being macropores.

6. The method of claim 1, wherein the catalyst precursor has a compact bulk density of at most 1.6 g/cc.

7. The method of claim 1, wherein the catalyst precursor has a BET surface area in the range of 40 to 400 m²/g.

8. The method of claim 1, wherein upon sulfidation, forms a bulk-multi-metallic catalyst for hydrotreating a hydrocarbon feed having an atmospheric residue boiling point of at least 343°C. (650°F.) with a hydrodenitrification (HDN) conversion rate of at least 99%.

9. The method of any of claims 1-2, wherein upon sulfidation, forms a bulk-multi-metallic catalyst for hydrotreating a hydrocarbon feed having an average molecular diameter ranging from 0.9 nm to 1.7 nm and an average molecular weight Mn ranging from 300 to 400.

10. The method of claim 2, wherein
M^{P} is at least a Group VIII metal, M^{VIB} is selected from molybdenum, tungsten, and combinations thereof, and L is at least one of carboxylates, enolates, and combinations thereof.

11. The method of claim 1, wherein the catalyst precursor has a surface area in the range of about 40 to 300 m²/g; a compact bulk density (CBD) of at most 1.6 g/cc; a pore volume of 0.002 to 2.0 cm³/g; a crush strength of at least 2.3 kg (5 lbs) and an attrition loss of less than 7 wt.%.

12. The method of claim 10, wherein L is maleate.

13. The method of claim 1, wherein the diluent is selected from the group of titania, sodium silicate, potassium silicate, silica gels, silica sols, hydronium- or ammonium-stabilized silica sols, sodium aluminate, potassium aluminate, aluminum sulfate, aluminum nitrate, magnesium aluminosilicate clay, magnesium metal, magnesium hydroxide, magnesium halides, magnesium sulfate, magnesium nitrate, zirconia, cationic clay, anionic clays, zinc oxide, zinc sulfide, tetraethyl orthosilicate, silicic acid, niobia, and combinations thereof.

## Patentansprüche

1. Verfahren zum Bilden eines Katalysators aus einem Katalysator-Vorläufer mit geringer volumetrischer Schrumpfung, das Verfahren umfassend
Bilden einer Ausfällung, umfassend mindestens einen Promotormetall-Vorläufer, mindestens einen Vorläufer eines Metalls der Gruppe VIB, wahlweise mindestens ein Ligationsmittel und wahlweise mindestens einen Verdünner, wobei der Promotormetall-Vorläufer ausgewählt ist aus der Gruppe VIII, der Gruppe IIB, der Gruppe IIA, der Gruppe IVA und Kombinationen daraus;
Entfernen von mindestens 50% der Flüssigkeit aus der Ausfällung zum Bilden eines Filterkuchens;
Trocknen des Filterkuchens mit einem nicht agglomerierenden Trocknungsverfahren, ausgewählt aus Flockentrocknung, Gefriertrocknung und Fließbetttrocknung;
Zusetzen zum Filterkuchen mindestens eines aus einem Formgebungsmittel, einem Porenbildner, einem Peptisierungsmittel, einem Verdünner, und Kombinationen davon, zum Bilden eines Chargengemischs;
Formen des Chargengemischs zu einem geformten Katalysator-Vorläufer durch irgendeines aus Pelletisierung, Extrusion, Tablettierung, Gießen, Trommeln, Pressen, Zerstäuben oder Sprühtrocknung;
Trocknen des geformten Katalysator-Vorläufers bei einer Temperatur im Bereich von 50°C bis 200°C während 15 Minutes bis 12 Stunden; und
Schwefeln des geformten Katalysator-Vorläufers zum Bilden des Roh-Multimetallikkatalysators;
wobei der geformte Katalysator-Vorläufer eine volumetrische Schrumpfung geringer als 12% nach Schwefelung bei einer Temperatur von mindestens 100°C während mindestens 30 Minuten hat; und
wobei der Katalysator-Vorläufer ein Hydroxydmaterial ist.

2. Verfahren gemäß Anspruch 1, wobei der Katalysator-Vorläufer die Formel Aᵥ[(M^{P})(OH)ₓ(L)ⁿ_{y}]_{z}(M^{VIB}O₄) hat,
worin A mindestens eines ist aus einem Alkalimetallkation, einem Ammonium-, einem organischen Ammonium- und einem Phosphoniumkation;
M^{P} die mindestens eine Promotor-Metallverbindung ist, und M^{P} ausgewählt ist aus der Gruppe VIII, der Gruppe IIB, der Gruppe IIA, der Gruppe IVA und Kombinationen davon;
L das mindestens eine Ligationsmittel ist;
M^{VIB} das mindestens eine Metall der Gruppe VIB ist, mit einem Oxydationszustand von +6;
M^{P}:M^{VIB} ein Atomverhältnis von 100:1 bis 1:100 hat;
v-2 + P * z - x * z + n * y * z = 0; und 0 ≤ y ≤ -P/n; 0 ≤ x ≤ P; 0 ≤ v ≤ 2; 0 ≤ z.

3. Verfahren gemäß Anspruch 1, wobei der Katalysator-Vorläufer eine restliche geometrische Volumenschrumpfung geringer als 10% nach Schwefelung bei einer Temperatur von mindestens 100°C während mindestens 30 Minuten hat.

4. Verfahren gemäß Anspruch 1, wobei der Katalysator-Vorläufer ein Gesamtporenvolumen von mindestens 0,10 g/cm³ hat.

5. Verfahren gemäß Anspruch 1, wobei der Katalysator-Vorläufer eine im Wesentlichen monomodale Porengrößenverteilung hat, wobei mindestens 95% der Poren Makroporen sind.

6. Verfahren gemäß Anspruch 1, wobei der Katalysator-Vorläufer eine Kompakt-Schüttdichte von höchstens 1,6 g/cm³ hat.

7. Verfahren gemäß Anspruch 1, wobei der Katalysator-Vorläufer eine BET-Oberfläche im Bereich von 40 bis 400 m²/g hat.

8. Verfahren gemäß Anspruch 1, wobei nach Schwefelung ein Roh-multimetallischer Katalysator gebildet wird für die Hydrobehandlung einer Kohlenwasserstoffzufuhr mit einem atmosphärischen Siedepunkt des Rests von mindestens 343°C (650°F) mit einer Hydrodenitrifizierungs- (HDN)-Umwandlungsrate von mindestens 99%.

9. Verfahren gemäß irgendeinem der Ansprüche 1 bis 2, wobei nach Schwefelung ein Roh-multimetallischer Katalysator gebildet wird für die Hydrobehandlung einer Kohlenwasserstoffzufuhr mit einem durchschnittlichen Molekulardurchmesser im Bereich von 0,9 nm bis 1,7 nm und einem durchschnittlichen Molekulargewicht Mn im Bereich von 300 bis 400.

10. Verfahren gemäß Anspruch 2, wobei
M^{P} mindestens ein Metall der Gruppe VIII ist, M^{VIB} ausgewählt ist aus Molybdän, Wolfram und Kombinationen davon und L mindestens eines ist aus Carboxylaten, Enolaten und Kombinationen davon.

11. Verfahren gemäß Anspruch 1, wobei der Katalysator-Vorläufer eine Oberfläche im Bereich von 40 bis 300 m²/g hat; eine Kompakt-Schüttdichte (CBD) von höchstens 1,6 g/cm³; ein Porenvolumen von 0,002 bis 2,0 cm³/g; eine Druckfestigkeit von mindestens 2,3 kg (5 lbs), und einen Abnutzungsverlust geringer als 7 Gew.-%.

12. Verfahren gemäß Anspruch 10, wobei L Maleat ist.

13. Verfahren gemäß Anspruch 1, wobei der Verdünner ausgewählt ist aus der Gruppe Titanoxyd, Natriumsilicat, Kaliumsilicat, Kieselgele, Siliciumoxydsole, Hydronium- oder Ammonium-stabilisierte Siliciumoxydsole, Natriumaluminat, Kaliumaluminat, Aluminiumsulfat, Aluminiumnitrat, Magnesiumaluminosilicat-Ton, metallisches Magnesium, Magnesiumhydroxyd, Magnesiumhalogenide, Magnesiumsulfat, Magnesiumnitrat, Zirkonoxyd, kationischer Ton, anionische Tone, Zinkoxyd, Zinksulfid, Tetraethylorthosilicat, Kieselsäure, Nioboxyd und Kombinationen davon.

## Revendications

1. Procédé pour former un catalyseur à partir d'un précurseur de catalyseur ayant une mesure de retrait volumique basse, le procédé comprenant :
former un précipité comprenant au moins un précurseur de métal promoteur, au moins un précurseur de métal du Groupe VIB, éventuellement au moins un agent de ligature, et éventuellement au moins un diluant, où le précurseur de métal promoteur est sélectionné parmi le Groupe VIII, le Groupe IIB, le Groupe IIA, le Groupe IVA, et leurs combinaisons ;
enlever au moins 50 pour cent du liquide du précipité pour former un gâteau de filtration ;
sécher le gâteau de filtration par un procédé de séchage non agglomérant sélectionné parmi le séchage éclair, la lyophilisation et séchage à lit fluide ;
ajouter au gâteau de filtration au moins un parmi un agent d'aide à la formation, un agent porogène, un agent de peptidisation, un diluant, et leurs combinaisons, pour former un mélange de charge ;
former le mélange de charge en un précurseur de catalyseur formé par un quelconque parmi pelletisation, extrusion, pastillage, moulage, culbutage, pressage, pulvérisation et séchage par atomisation ;
sécher le précurseur de catalyseur formé à une température dans l'intervalle de 50°C à 200°C pendant 15 minutes à 12 heures ; et
sulfurer le précurseur de catalyseur formé pour former le catalyseur multimétallique en vrac ;
où le précurseur de catalyseur a une mesure de retrait volumique de moins de 12 pour cent pour une sulfuration à une température d'au moins 100°C pendant au moins 30 minutes ; et
où le précurseur de catalyseur est un matériau hydroxyde.

2. Procédé selon la revendication 1, dans lequel le précurseur de catalyseur est selon la formule Aᵥ[(M^{P})(OH)ₓ(L)ⁿ_{y}]_{z}(M^{VIB}O₄),
où A est au moins un parmi cation de métal alcalin, un cation ammonium, ammonium organique ou phosphonium ;
M^{P} est l'au moins un composé de promoteur métallique, et M^{P} est sélectionné parmi le Groupe VIII, le Groupe IIB, le Groupe IIA, le Groupe IVA et leurs combinaisons ;
L est l'au moins un agent de ligature ;
M^{VIB} est au moins un métal du Groupe VIB, ayant un état d'oxydation de +6 ;
M^{P}:M^{VIB} a un rapport atomique de 100:1 à 1:100 ;
v - 2 + P * z - x * z + n * y * z = 0; et 0 ≤ y ≤ -P/n; 0 ≤ x ≤ P; 0 ≤ v ≤ 2; 0 ≤ z.

3. Procédé selon la revendication 1, dans lequel le précurseur de catalyseur a une mesure résiduelle géométrique de retrait volumique de moins de 10 pour cent pour une sulfuration à une température d'au moins 100°C pendant au moins 30 minutes.

4. Procédé selon la revendication 1, dans lequel le précurseur de catalyseur a un volume total de pores d'au moins 0,10 g/cm³.

5. Procédé selon la revendication 1, dans lequel le précurseur de catalyseur a une distribution de tailles de pores essentiellement monomodale avec au moins 95 pour cent des pores étant des macropores.

6. Procédé selon la revendication 1, dans lequel le précurseur de catalyseur a une masse volumique apparente compacte d'au plus 1,6 g/cm³.

7. Procédé selon la revendication 1, dans lequel le précurseur de catalyseur a une surface BET dans l'intervalle de 40 à 400 m²/g.

8. Procédé selon la revendication 1, dans lequel, après sulfuration, un catalyseur multimétallique en vrac est formé pour l'hydrotraitement d'une alimentation d'hydrocarbures ayant un point d'ébullition atmosphérique du résidu d'au moins 343°C (650°F) avec un taux de conversion d'hydrodénitrification (HDN) d'au moins 99 pour cent.

9. Procédé selon quelconque des revendications 1 à 2, dans lequel, après sulfuration, un catalyseur multimétallique en vrac est formé pour l'hydrotraitement d'une alimentation d'hydrocarbures ayant un diamètre moléculaire moyen de 0,9 nm à 1,7 nm et un poids moléculaire moyen Mn dans l'intervalle de 300 à 400.

10. Procédé selon la revendication 2, dans lequel
M^{P} est au moins un métal du Groupe VIII, M^{VIB} est sélectionné parmi le molybdène, le tungstène, et leurs combinaisons, et L est au moins un parmi carboxylates, énolates, et leurs combinaisons.

11. Procédé selon la revendication 1, dans lequel le précurseur de catalyseur a une surface dans l'intervalle de 40 à 300 m²/g ; une masse volumique apparente compacte (CBD) d'au plus 1,6 g/cm³; un volume de pores de 0,002 à 2,0 cm³/g ; une cohésion d'au moins 2,3 kg (5 lbs), et une perte d'attrition de moins de 7 pour cent en poids.

12. Procédé selon la revendication 10, dans lequel L est maléate.

13. Procédé selon la revendication 1, dans lequel le diluant est sélectionné parmi le groupe dioxyde de titane, silicate de sodium, silicate de potassium, gel de silice, sol siliceux, sols siliceux stabilisés par hydronium ou ammonium, aluminate de sodium, aluminate de potassium, sulfate d'aluminium, nitrate d'aluminium, argile de magnésium aluminosilicate, magnésium métallique, hydroxyde de magnésium, halogénures de magnésium, sulfate de magnésium, nitrate de magnésium, zircone, argile cationique, argiles anioniques, oxyde de zinc, sulfure de zinc, orthosilicate tétraéthylique, acide silicique, oxyde de niobium, et leurs combinaisons.
